# EUROPÄISCHE PATENTSCHRIFT

(11) **EP 1 981 788 B1**
(45) Veröffentlichungstag und Bekanntmachung des Hinweises auf die Patenterteilung: **02.09.2009**
(21) Anmeldenummer: 06818964.6
(22) Anmeldetag: 02.12.2006
(51) Int. Cl.: B65G 43/02

(54) **VERFAHREN ZUR ÜBERWACHUNG UND/ODER ZERSTÖRUNGSFREIEN PRÜFUNG EINES TRANSMISSIONSELEMENTS SOWIE MESSANORDNUNG ZUR DURCHFÜHRUNG DES VERFAHRENS**
METHOD FOR MONITORING AND/OR TESTING WITHOUT DESTRUCTION A TRANSMISSION ELEMENT, AND MEASURING ARRANGEMENT FOR CARRYING OUT THE METHOD
PROCEDE DE SURVEILLANCE ET/OU DE CONTROLE NON DESTRUCTIF D'UN ELEMENT DE TRANSMISSION ET ARRANGEMENT DE MESURE POUR METTRE EN OEUVRE LE PROCEDE

(30) Priorität: 10.02.2006 DE 102006006468
(43) Veröffentlichungstag der Anmeldung: 22.10.2008
(73) Patentinhaber: RWE Power Aktiengesellschaft, 45128 Essen (DE)
(72) Erfinder: ZIEGLER, Manfred, 50374 Erftstadt (DE); BÄUMLER, Manfred, 70736 Fellbach (DE); BÖKER, Uwe, 71404 Korb (DE)
(74) Vertreter: Polypatent
(86) Internationale Anmeldenummer: PCT/EP2006/011579
(87) Internationale Veröffentlichungsnummer: WO 2007/090449

(56) Entgegenhaltungen:
- AU-A- 7 568 981
- DE-A1- 2 854 562

## Beschreibung

Die Erfindung betrifft ein Verfahren zur Überwachung und/oder zerstörungsfreien Prüfung eines Transmissionselements mit wenigstens einem magnetisierbaren Zugträger.

Aus der DE 199 21 224 A1 ist ein Verfahren zur Überwachung eines endlos umlaufenden Fördergurts mit Stahlseilzugträger bekannt. Das Verfahren umfasst die Verwendung mindestens eines den Gurtverlauf abtastenden Metalldetektors mit welchem fortlaufend ein von dem Gurt erzeugtes Messsignal über dessen gesamte Länge erfasst wird. Bei einem ersten Gurtumlauf bzw. einer ersten Abtastung des Gurts über dessen gesamte Länge wird ein Referenzsignal erfasst, das als gurtspezifisches Signal gespeichert wird. Die Überwachung des Gurtbandes erfolgt durch einen fortlaufenden Vergleich des Referenzsignals mit dem Messsignal im Sinne eines Soll-/Ist-Vergleichs.

Bei diesem Verfahren wird durch die Aufzeichnung und Ablage eines Referenzsignals über die gesamte Länge des Fördergurtes ein gurtspezifisches Induktionsmuster (Fingerabdruck) erzeugt und gespeichert, aus welchem die Ortslage, der Signalpegel sowie die Signalform der sich in dem Fördergurt befindlichen tragenden Elemente, d. h. der Stahlseilzugträger, bestimmbar sind. Aufgrund eines Soll-/Ist-Vergleichs zwischen dem so abgelegten Referenzsignal mit dem fortlaufend erfassten Messsignal können verhältnismäßig wirkungsvoll Schädigungen der Stahlseilzugträger erkannt werden. Daraufhin können entsprechende Maßnahmen zur Außerbetriebnahme und Instandhaltung der Gurtbandförderanlage eingeleitet werden.

Die Durchführung dieses Verfahrens erfolgt mit einer Metallsuchspulenanordnung, wobei sich das Magnetfeld der stromdurchflossenen Spule ändert, wenn sich der metallende Querschnitt des umschlossenen Fördergurtes ändert.

In der Praxis hat sich herausgestellt, dass eine solche Metallsuchspule nur im Untertrum des Gurtbandförderers eingesetzt werden kann, da das Fördergut einen störenden Einfluss auf das Messergebnis hat. Weiterhin ist mit einer solchen Messanordnung nur eine beschränkte Auflösung zu erzielen, da die Messsignale über die Gurtbreite integriert werden. Zudem ist die Empfindlichkeit der Metallsuchspulen nicht homogen hinsichtlich der Lage der Schäden. So werden zum Beispiel Schäden im Randbereich des Gurtbandes nicht oder zu spät erkannt.

Aufgrund der erforderlichen Anordnung der Metallsuchspule im Untertrum des Gurtbandförderers werden Gewaltschäden am Gurtband verhältnismäßig spät erkannt. Wichtig wäre dabei die Detektion beispielsweise von Durchschlägen an den Stellen des Gurtbandes im Obertrum, an welchen eine Materialaufgabe erfolgt.

Schließlich ist die Messanordnung selbst verhältnismäßig teuer und aufwendig in der Montage, letzteres, da die Metallsuchspule das Gurtband vollständig umschließen muss.

Zur Erkennung einzelner Seilausrisse wird daher bislang so verfahren, dass ein vorgespanntes Seil quer zur Gurtlaufrichtung in geringem Abstand zum Gurt unter diesem hergeführt wird und mit Endschaltern verbunden wird. Ein heraushängendes Seil oder eine Zunge verfängt sich in dem vorgespannten Seil und betätigt den Endschalter, wodurch eine Abschaltung des Gurtbandes bewirkt wird. Die Seile werden unmittelbar hinter der Materialaufgabe im Obertrum (Übergabe) oder hinter der Abwurftrommel im Untertrum gespannt.

Ein Ansprechen dieses Systems erfordert, dass der Schaden bereits eine gewisse Größe angenommen hat, damit das vorgespannte Seil erfasst wird. Ein herabhängendes Seil oder eine Zunge werden an jeder Tragrollenstation weiter beansprucht, was zu einer ständigen Vergrößerung des Schadens führt. Entwickelt dieser sich zwischen zwei derartigen Überwachungseinrichtungen zu einer Größe, dass sich das herabhängende Seil bzw. die Zunge an einer Tragrollenstation oder anderen Elementen der Konstruktion verhakt, so kommt es trotz Überwachungseinrichtung zu einem ausgedehnten Längsriss.

Aus der DE 28 54 562 A1 ist eine Vorrichtung zur berührungslosen Überwachung von Fördergurten, insbesondere zum Feststellen von Längsschlitzen bekannt, die Senderspulen und Empfangsspulen umfasst. Die Senderspulen sind als Spulen mit nicht geschlossenem Eisenkern ausgebildet, die ein weit in den Raum reichendes Magnet-Streufeld erzeugen. Die Kraftlinien dieses Kraftfeldes verursachen in den innerhalb des Gurtes befindlichen längsverlaufenden Stahlseilen eine Magnetisierung. In Laufrichtung des Fördergurtes hinter den Sendern sind Empfangsspulen angeordnet, mittels derer die Remanenz der so erzeugten Magnetisierung messbar ist. Eine Auswertung des gemessenen Magnetfeldes ermöglicht die Erfassung einer Lageänderung des Fördergurtes.

Aus der AU 75 689 81 A ist ein Verfahren zur Überwachung eines magnetisierbaren Zugträger umfassenden Fördergurtes bekannt, welches unter Verwendung von Sensoren durchgeführt wird, die die Lage und Anordnung der Stahlseilzugträger des Fördergurtes erfassen. Das Verfahren wird ebenfalls unter Verwendung eines induzierten magnetischen Feldes durchgeführt. Die Sensoren sind hierfür jeweils mit einer Spulenanordnurig versehen, wobei sich das Messverfahren in bekannter Art und Weise das Phänomen zunutze macht, dass das Magnetfeld der stromdurchflossenen Spule sich ändert, wenn sich der Abstand zwischen den Zugträgem und der Spule bzw. dem Sensor ändert. Die AU 75 689 81 A geht dabei von der Erkenntnis aus, dass bei Längsrissen im Fördergurt dieser soweit von dem betreffenden Sensor versetzt wird, dass sich das Magnetfeld der Spule in dem betreffenden Messkopf signifikant ändert.

Dieses Verfahren ist mit den zuvor beschriebenen Nachteilen bekannter Metallsuchspulenanordnung behaftet.

Trotz dieser bereits beschriebenen Überwachungseinrichtungen bleibt also die Aufgabe, Gurtschäden bereits frühzeitig, d. h. in der Entstehungsphase sicher zu erkennen, um die Anlage rechtzeitig abschalten zu können. Weiterhin fehlt bis heute ein System, das den Zustand des Gurtes hinreichend gut automatisch erfasst, um den Gurt zum optimalen Zeitpunkt reparieren oder austauschen zu können.

Der Erfindung liegt daher die Aufgabe zugrunde, ein Verfahren zur Überwachung und/oder zerstörungsfreien Prüfung eines Transmissionselements wie beispielsweise eines Gurtbandes oder dergleichen bereitzustellen, welches die zuvor erwähnten Nachteile nicht aufweist.

Der Erfindung liegt weiterhin die Aufgabe zugrunde, eine Messanordnung zur Durchführung eines solchen Verfahrens bereitzustellen.

Die Aufgabe wird gelöst mit den Merkmalen des Anspruchs 1.

Da das erfindungsgemäße Verfahren ohne eine Spulenanordnung auskommt, sondern lediglich die Verwendung von Magnetfeldsensoren vorsieht, ist es möglich, beispielsweise bei Überwachung eines umlaufenden Gurtbandes eines Schüttgutförderers, eine Messung an beliebiger Stelle des Gurtumlaufs vorzunehmen. Eine Umschließung des Gurtbandes mit der Messanordnung ist nicht erforderlich. Das Messsignal wird nicht von dem Fördergut gestört, solange kein ferromagnetisches Material gefördert wird. Das Messsignal ist laufrichtungs- und geschwindigkeitsunabhängig.

Die Messung wird ohne Aufmagnetisierung des Zugträgers, d. h. ohne Fremdmagnetisierung durchgeführt. Die Magnetfeldsensoren registrieren Störungen des natürlichen Erdmagnetfeldes aufgrund der Anwesenheit ferromagnetischer Stoffe. Solche Sensoren sind äußert kompakt und können in nahezu beliebiger Zahl nebeneinander angeordnet werden.

Vorzugsweise erfolgt die Messung in einem Messbereich (Empfindlichkeitsbereich) von bis zu 200 µT, vorzugsweise von bis zu 100 µT. Die Signalstärke der zu messenden Signale beträgt etwa +/-50 µT.

Bei einer bevorzugten Variante des erfindungsgemäßen Verfahrens erfolgt die Messung an einem Gurtband eines Gurtbandförderers aus gummielastischem Material mit in dieses eingebettenden Stahlseilen als Zugträger. Das Verfahren gemäß der Erfindung ist jedoch so zu verstehen, dass eine Überwachung und/oder Prüfung jeglicher umlaufender oder oszilierender Transmissionselemente mit oder bestehend aus magnetisierbaren Zugträgern möglich ist. Beispielsweise kann eine zerstörungsfreie Seilprüfung eines Stahlseils mittels Magnetfelddetektion anstelle der bisher bekannten radiologischen Untersuchung oder induktiven Erfassung von Schädigungen durchgeführt werden. Jede Schädigung einzelner Seilstränge bewirkt eine Veränderung der magnetischen Feldlinien, die von Magnetfeldsensoren erfasst werden. Die Messung erfolgt vorzugsweise dreiachsig und kann beispielsweise mittels einer oder mehrerer Förstersonden durchgeführt werden.

Die Erfassung des von dem zu messenden Gegenstand erzeugten Magnetfelds kann sowohl dynamisch als auch statisch erfolgen.

Selbstverständlich ist es möglich, das zu messende Signal durch Fremdmagnetisierung zu verstärken. Eine solche Fremdmagnetisierung ist aber nicht unbedingt erforderlich.

Erfindungsgemäß ist vorgesehen, dass über die Magnetfeldmessung die Solllage der Zugträger in dem Gurtband geprüft wird. Auf diese Art und Weise ist eine Qualitätsprüfung des verwendeten Gurtbandes ggf. bereits vor dessen Einbau in die Gurtbandfördereinrichtung möglich. Aufgrund des von jedem Zugträger erzeugten Signals lässt sich verhältnismäßig exakt die Lage der Zugträger eines Gurtbandes zueinander erkennen.

Auf diese Art und Weise kann nicht nur die Solllage der Zugträger zueinander identifiziert werden, vielmehr kann auch ein etwaiger Schieflauf des Gurtbandes erkannt werden, wodurch ein Anlauf des Gurtes an die Konstruktionsteile des Gurtbandförderers in Folge von Schieflauf rechtzeitig verhindert werden kann.

Die Kalibrierung der Messanordnung kann durch Erfassung eines Referenzsignals des betreffenden oder anderen Transmissionselements in einem definierten Zustand erfolgen.

Alternativ oder zusätzlich zur Materialprüfung mit dem zuvorbeschriebenen Verfahren ist vorgesehen, dass die Messung während des Betriebs des Gurtbandförderers zwecks Überwachung desselben erfolgt.

Zusätzlich kann die Messung zur Geschwindigkeitsermittlung des Gurtbandes verwendet werden. Die Geschwindigkeitsermittlung kann beispielsweise durch fortlaufenden Vergleich eines oder mehrerer bei einem ersten Gurtumlauf erfasster Referenzsignale mit einem oder mehreren Messsignalen erfolgen.

Zweckmäßigerweise wird die Breite des Gurtes in mehreren Gurtumläufen abgetastet. Hierdurch kann die Messanordnung verhältnismäßig einfach ausgebildet sein.

Die zuvor erwähnte Aufgabe wird weiterhin gelöst durch eine Messanordnung zur Durchführung des zuvor beschriebenen Verfahrens mit wenigstens einem magnetisierbaren Zugträger wobei die Messanordnung einen oder mehrere vorzugsweise mehrachsige Magnetfeldsensoren umfasst, die im Abstand zu den Transmissionselement so angeordnet sind, dass das von dem Zugträger gestörte magnetische Feld als Messsignal erfassbar ist. Eine bevorzugte Ausführungsform der Messanordnung kann weiterhin wenigstens eine Datenerfassungs- und Auswerteeinrichtung umfassen.

Die Messanordnung kann stationär an einem Gurtbandförderer vorgesehen sein.

Vorzugsweise ist über die Breite des Gurtbandes eine Anzahl von n-Sensoren mit einem Abstand voneinander vorgesehen, der in etwa dem Abstand der Zugträger des Gurtbandes voneinander entspricht. Auf diese Art und Weise vermittelt eine Messung Aufschluss über den Zustand eines jeden Zugträgers in dem Gurtband.

Bei einer Variante der Messanordnung gemäß der Erfindung ist vorgesehen, dass die Sensoren unterhalb des Gurtbandes im Obertrum des Gurtbandförderers angeordnet sind.

Diese können und sollten alle mit gleichem Abstand zum Gurtband angeordnet sein.

Besonders zweckmäßig ist es, wenn die Sensoren der Kontur (Muldung des Gurtbandes) folgend angeordnet sind.

Diese können beispielsweise in Form einer an und für sich bekannten Girlande an der Unterseite des Gurtbandes angebracht sein.

Wie vorstehend bereits erwähnt, muss nicht die gesamte Breite des Gurtbandes mit Sensoren abgedeckt sein, vielmehr kann es zweckmäßig sein, eine Anzahl von n-Sensoren auf einem über die Breite des Gurtbandes verfahrbaren Gestell anzuordnen. Das Gestell kann dann für eine oder mehrere Gurtumlaufe jeweils über die Breite des Gurtbandes verstellt werden, sodass der gesamte Querschnitt des Gurtbandes in mehreren Umläufen messtechnisch erfasst werden kann. Diese Anordnung hat auch den Vorzug, dass jede beliebige Spurlage der Sensoren einstellbar ist.

Zur Durchführung von Materialprüfungen vor Einbau bzw. vor Vulkanisierung von Gurtbänden kann es zweckmäßig sein, die Messanordnung auf einem Handwagen zu montieren, mit dem dann ein stationär angeordnetes bzw. ausgebreitetes Gurtband befahrbar und abtastbar ist.

Zur punktuellen Untersuchung eines Gurtbandes kann es zweckmäßig sein, die Messanordnung als tragbare Mess- und Erfassungseinrichtung (Handscanner) auszubilden.

Die Erfindung wird nachstehend anhand eines in den Zeichnungen dargestellten Ausführungsbeispiels erläutert, und zwar am Beispiel der Überwachung eines Gurtbandförderers.

Es zeigen:
- Figur 1:: eine schematische, stark vereinfachte Abbildung eines Gurtbandförderers mit einer Messanordnung gemäß der Erfindung,
- Figur 2:: einen Teil der im Obertrum des Gurtbandförderers montierten Messanordnung,
- Figur 3:: eine Darstellung einer zur stationären Anbringung an einem Gurtbandförderer vorgesehenen Messanordnung,
- Figur 4:: eine Unteransicht des Obertrums des Gurtbandförderers mit einer Messanordnung gemäß der Erfindung,
- Figur 5:: eine perspektivische Ansicht der in Figur 4 dargestellten Messanordnung an dem Gurtbandförderer und
- Figur 6:: ein schematisches Messprotokoll einer Messung an einem Gurtband nach dem erfindungsgemäßen Verfahren.

Wie vorstehend bereits erwähnt, werden das Verfahren und die Messanordnung gemäß der Erfindung nachstehend nur beispielsweise für die Überwachung eines Gurtbandförderers zum Transport von Schüttgut beschrieben.

Ein solcher Gurtbandförderer 1 umfasst ein umlaufendes Gurtband 2 aus gummielastischem Material mit in diesem eingebetteten Stahlseilen als Zugträger. Die in Bandanlagen in Braunkohletagebauten häufig eingesetzten Gurtbänder 2 bestehen aus Gummi und besitzen etwa eine Breite von 2.800 mm. In das Gummi sind Stahlseile mit einem Durchmesser von 9,2 mm bei einer Teilung von 15 mm einvulkanisiert. Ein Gurt der Breite 2.800 mm enthält 165 Stahlseile. Ein solcher Stahlseilfördergurt besitzt die Nennfestigkeit St 4.500. Die Lebensdauer des Gurtes beträgt durchschnittlich etwa 6 bis 7 Jahre. Lebensdauerbestimmend sind die Beschädigungen des Gurtes durch aufprallendes Material an der Übergabestelle, Anlaufen des Gurtes an Konstruktionsteile in Folge von Schieflauf, Überdehnung der Stahlseile aufgrund von Anbackungen auf den Trommeln sowie Reibverschleiß an den Längsabdichtungen.

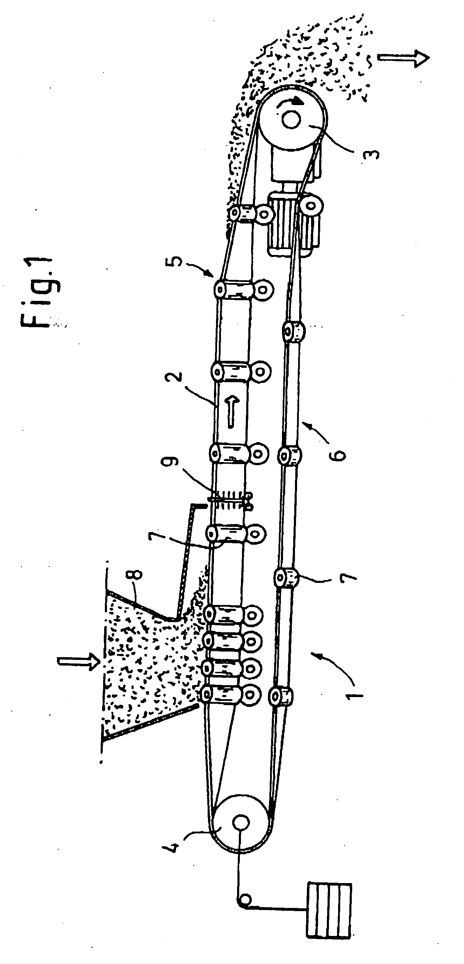

Ein Gurtbandförderer 1 ist stark vereinfacht schematisch in Figur 1 dargestellt. Dieser umfasst das endlos umlaufende Gurtband 2 aus Gummi mit in dieses einvulkanisierten Stahlseilen, eine Antriebstrommel 3 und eine oder mehrere Umlenktrommeln 4, zwischen denen das Gurtband 2 gespannt ist. Das Gurtband 2 bildet einen Obertrum 5 (Lasttrum) und einen Untertrum 6 (Leertrum), wobei das Gurtband 2 sowohl im Obertrum als auch im Untertrum durch Tragrollen 7 gehalten wird. Die Tragrollen 7 sind an einem nicht dargestellten Gerüst aufgehängt. Mit 8 ist eine Aufgabeschurre bezeichnet, über die das Schüttgut auf das Gurtband 2 aufgegeben wird. Im Obertrum ist die Muldung des Gurtbandes 2 naturgemäß größer als im Untertrum 6. Darüber hinaus ist auch der Abstand der Tragrollen 7 zueinander zumindest im Bereich der Schurre 8 kürzer als im Untertrum 6.

In dem in Figur 1 dargestellten Ausführungsbeispiel ist der Gurtumlauf im Uhrzeigersinn. In Richtung des Gurtumlaufs unmittelbar hinter der Schurre 8 ist im Obertrum 5 unterhalb des Gurtbandes 2 eine Messanordnung 9 gemäß der Erfindung angeordnet. Die Messanordnung 9 umfasst eine Anzahl von nebeneinander positionierten und zueinander fixierten Magnetfeldsensoren 10, die bei der beschriebenen Anordnung als Förstersonden ausgebildet sind.

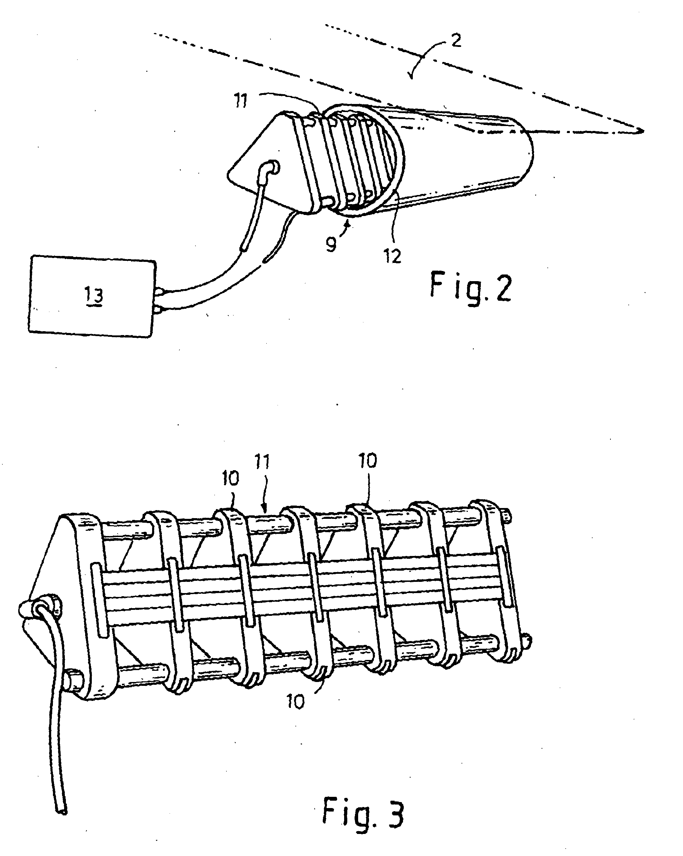

Wie insbesondere der Figur 2 zu entnehmen ist, ist bei dem dort dargestellten Ausführungsbeispiel vorgesehen, dass die Magnetfeldsensoren 10 zu einem Sensorpaket zusammengefasst sind. Das Sensorpaket 11 umfasst eine vorgegebene Anzahl von in gleichem Abstand nebeneinander angeordneten Magnetfeldsensoren. Das Sensorpaket kann beispielsweise in dem in Figur 2 dargestellten röhrenförmigen Führungskanal 12 unterhalb des Gurtbandes geschützt vor Schmutz und Witterungseinflüssen angeordnet sein. Die Länge des Sensorpakets 11 ist ungleich der Gurtbreite, dieses wird für jeweils einen oder mehrere Gurtumläufe in dem Führungskanal 12 verschoben, sodass die Breite des Gurtbandes 2 in mehreren Messzyklen abgetastet wird. In dem dargestellten Ausführungsbeispiel sind 6 Magnetfeldsensoren 10 zu einem Sensorpaket 11 zusammengefasst, wobei der Abstand der Magnetfeldsensoren 10 voneinander etwa 70 mm beträgt, was weiter ist als der Abstand der Stahlseile im Gurtband 2 voneinander. Aufgrund Verschiebung des Sensorpakets 11 in dem Führungskanal 12 kann allerdings jede beliebige Auflösung der Messung erzielt werden, denn es ist wünschenswert für jedes Stahlseil im Gurtband 2 ein Messsignal zu erfassen. Das Sensorpaket 11 kann auf einer mit Linearantrieb verschiebbaren Lafette angeordnet sein. Alternativ ist es möglich, an einer Stelle unterhalb des Gurtbandes mehrere Sensorpakete nebeneinander anzuordnen, um die Sensoren mit möglichst gleichmäßigem Abstand zum Gurtband auch bei starker Muldung desselben anordnen zu können.

Das Sensorpaket 11 und jeder einzelne Magnetfeldsensor 10 innerhalb des Sensorpakets 11 sind an eine Datenerfassungs- und Auswerteeinrichtung 13 angeschlossen, die in den Figuren nur schematisch dargestellt ist. Dies kann im einfachsten Fall ein PC mit einer entsprechenden Anzahl von analogen Signaleingängen sein.

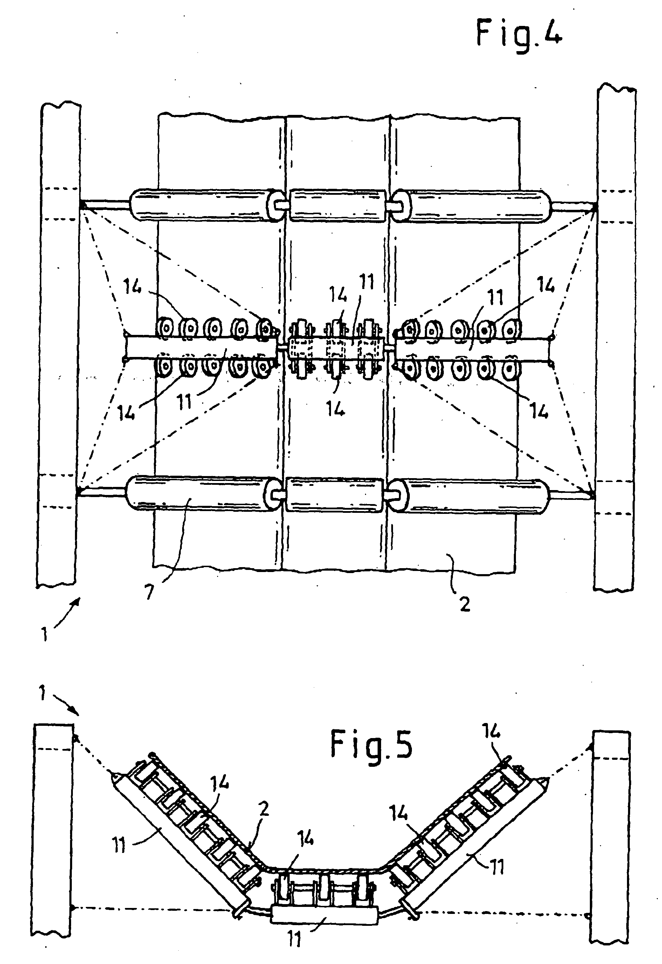

Bei dem in den Figuren 4 und 5 dargestellten Ausführungsbeispiel sind insgesamt drei Sensorpakete 11 unterschiedlicher Größe nach Art einer Girlande unterhalb des Gurtbandes 2 im Obertrum 5 des Gurtbandförderers 1 aufgehängt, wobei zur Erzielung eines gleichmäßigen Abstandes der Magnetfeldsensoren 10 zu dem Gurtband 2 die Sensorpakete 11 mittels Führungsrollen 14 gegen das Gurtband 2 gehalten werden. Auf diese Art und Weise ist eine präzise Abtastung des Gurtbandes 2 über dessen gesamte Breite bis zu den Rändern möglich. Durch die besondere Anordnung der Sensorpakete kann selbst bei starker Muldung des Gurtbandes 2 ein gleichmäßiger Abstand zu demselben eingehalten werden.

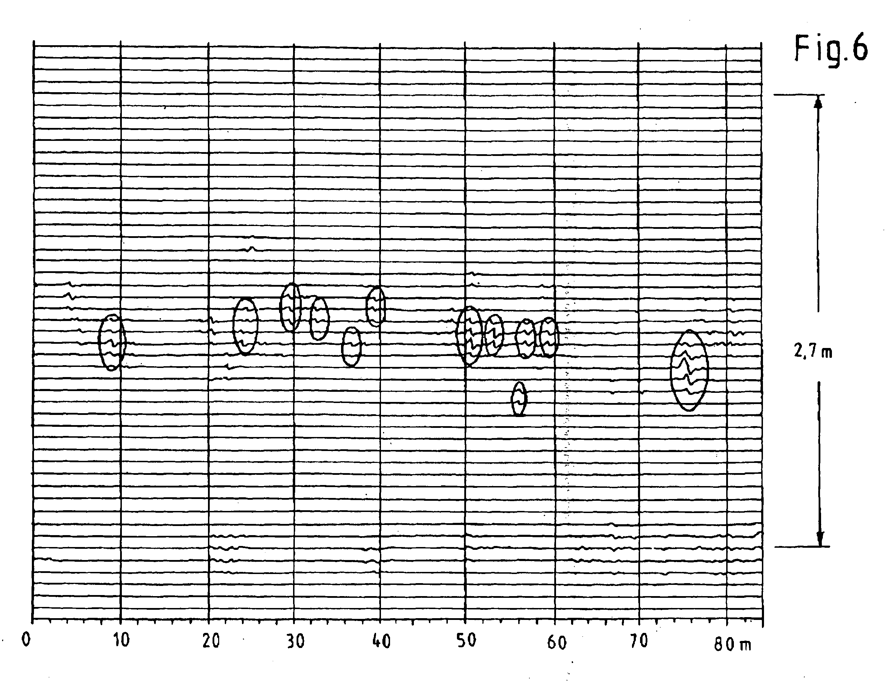

Figur 6 zeigt eine Messung eines Gurtbandabschnitts, bei welchem auf der Ordinate die Gurtbreite und auf der Abszisse die Gurtlänge aufgetragen ist. Die einzelnen Signale verlaufen ungestört etwa geradlinig, Ausschläge sind dort zu erkennen, wo die Zugträger des Gurtbandes 2 geschädigt sind.

Das erfindungsgemäße Messverfahren ist sehr empfindlich, sodass bereits ankorrodierte Zugträger eine verhältnismäßig eindeutige Veränderung des Messsignals erzeugen.

### Bezugszeichenliste

- 1: Gurtbandförderer
- 2: Gurtband
- 3: Antriebstrommel
- 4: Umlenktrommel
- 5: Obertrum
- 6: Untertrum
- 7: Tragrollen
- 8: Schurre
- 9: Messanordnung
- 10: Magnetfeldsensoren
- 11: Sensorpaket
- 12: Führungskanal
- 13: Datenerfassungs- und Auswerteeinrichtung
- 14: Führungsrollen

## Patentansprüche

1. Verfahren zur Überwachung und/oder zerstörungsfreien Prüfung eines Transmissionselements mit wenigstens einem magnetisierbaren Zugträger, wobei eine ein- oder mehrachsige Messung des von dem Zugträger gestörten Erdmagnetfelds durchgeführt wird, indem wenigstens ein Magnetfeldsensor oder eine Anordnung mehrerer Magnetfeldsensoren relativ zu dem Transmissionselement oder das Transmissionselement relativ zu der Messanordnung geführt wird und die erfassten Messsignale mit einer Datenerfassungseinrichtung in Hinblick auf Anomalien des erfassten Magnetfeldes ausgewertet werden, wobei die Messung ohne Aufmagnetisierung (Fremdmagnetisierung) des Zugträgers durchgeführt wird.

2. Verfahren nach Anspruch 1, **dadurch gekennzeichnet, dass** die Messung in einem Messbereich von bis zu 200 µT, vorzugsweise von bis 100 µT durchgeführt wird.

3. Verfahren nach einem der Ansprüche 1 oder 2, **dadurch gekennzeichnet, dass** die Messung an einem Gurtband eines Gurtbandförderers aus gummielastischem Material mit in dieses eingebetteten Stahlseilen als Zugträger durchgeführt wird.

4. Verfahren nach Anspruch 3, **dadurch gekennzeichnet, dass** über die Magnetfeldmessung die Solliage der Zugträger in dem Gurtband überprüft wird.

5. Verfahren nach einem der Ansprüche 1 bis 4, **dadurch gekennzeichnet, dass** die Kalibrierung der Messanordnung durch Erfassung eines Referenzmesssignals des betreffenden oder anderen Transmissionselements in einem definierten Zustand erfolgt.

6. Verfahren nach Anspruch 4, **dadurch gekennzeichnet, dass** die Messung während des Betriebs des Gurtbandförderers erfolgt.

7. Verfahren nach einem der Ansprüche 4 oder 6, **dadurch gekennzeichnet, dass** die Messung zur Geschwindigkeitsermittlung des Gurtbandes verwendet wird.

8. Verfahren nach Anspruch 1, **dadurch gekennzeichnet, dass** die Geschwindigkeitsermittlung durch fortlaufenden Vergleich eines oder mehrerer bei einem ersten Gurtumlauf erfasster Referenzsignale mit einem oder mehreren Messsignalen erfolgt.

9. Verfahren nach einem der Ansprüche 4 bis 8, **dadurch gekennzeichnet, dass** die Breite des Gurtes in mehreren Gurtumläufen abgetastet wird.

10. Messanordnung zur Durchführung des Verfahrens nach einem der Ansprüche 1 bis 10, wobei die Messanordnung einen oder mehrere vorzugsweise mehrachsige Magnetfeldsensoren (10) mit einer Messempfindlichkeit von ≤ 200 µT umfasst, die mit Abstand zu dem Transmissionselement so angeordnet sind, dass das von dem Zugträger gestörte erdmagnetische Feld als Messsignal erfassbar ist.

11. Messanordnung nach Anspruch 10, **dadurch gekennzeichnet, dass** diese weiterhin wenigstens eine Datenerfassungs- und Auswerteeinrichtung (13) umfasst.

12. Messanordnung nach einem der Ansprüche 10 oder 11, **dadurch gekennzeichnet, dass** diese stationär an einem Gurtbandförderer (1) vorgesehen ist.

13. Messanordnung nach Anspruch 12, **dadurch gekennzeichnet, dass** diese über die Breite des Gurtbandes (2) eine Anzahl von n-Sensoren mit einem Abstand voneinander aufweist, der vorzugsweise in etwa dem Abstand der Zugträger des Gurtbandes (2) voneinander entspricht.

14. Messanordnung nach einem der Ansprüche 10 bis 13, **dadurch gekennzeichnet, dass** die Sensoren unterhalb des Gurtbandes (2) im Obertrum (5) des Gurtbandförderers (1) angeordnet sind.

15. Messanordnung nach einem der Ansprüche 12 bis 14, **dadurch gekennzeichnet, dass** die Sensoren mit gleichem Abstand zum Gurtband (2) angeordnet sind.

16. Messanordnung nach einem der Ansprüche 14 oder 15, **dadurch gekennzeichnet, dass** die Sensoren der Kontur (Muldung) des Gurtbandes (2) folgend angeordnet sind.

17. Messanordnung nach einem der Ansprüche 10 bis 16, **dadurch gekennzeichnet, dass** eine Anzahl von n-Sensoren auf einem über die Breite des Gurtbandes (2) verfahrbaren Gestell oder einer Lafette angeordnet ist.

18. Messanordnung nach einem der Ansprüche 10 oder 11, **dadurch gekennzeichnet, dass** diese auf einem Handwagen angeordnet ist.

19. Messanordnung nach Anspruch 10, **dadurch gekennzeichnet, dass** diese als tragbare Mess- und Erfassungseinrichtung (Handscanner) ausgebildet ist.

## Claims

1. Method for monitoring and/or non-destructive testing of a transmission element with at least one magnetisable tension member, the earth's magnetic field, which is disturbed by the tension member, being measured along one or more axes by at least one magnetic field sensor or an arrangement of multiple magnetic field sensors being guided relative to the transmission element, or the transmission element relative to the measuring arrangement, and by the captured measurement signals being evaluated using a data capture device with respect to anomalies of the captured magnetic field, and the measurement being carried out without (external) magnetisation of the tension member.

2. Method according to Claim 1, **characterized in that** the measurement is carried out in a measurement range of up to 200 µT, preferably up to 100 µT.

3. Method according to one of Claims 1 or 2, **characterized in that** the measurement is carried out on a web belt of a web belt conveyor of elastic rubber material with steel cables embedded in it as tension members.

4. Method according to Claim 3, **characterized in that** the target position of the tension members in the web belt is tested by the magnetic field measurement.

5. Method according to one of Claims 1 to 4, **characterized in that** the measuring arrangement is calibrated by capturing a reference measurement signal of the relevant or other transmission element in a defined state.

6. Method according to Claim 4, **characterized in that** the measurement takes place during operation of the web belt conveyor.

7. Method according to one of Claims 4 or 6, **characterized in that** the measurement is used to determine the speed of the web belt.

8. Method according to Claim 1, **characterized in that** the speed is determined by continuous comparison of one or more reference signals which are captured in a first belt revolution with one or more measurement signals.

9. Method according to one of Claims 4 to 8, **characterized in that** the width of the belt is sensed in multiple belt revolutions.

10. Measuring arrangement to carry out the method according to one of Claims 1 to 10, the measuring arrangement including one or more preferably multi-axis magnetic field sensors (10) with a measuring sensitivity of ≤ 200 µT, which are arranged at a distance from the transmission element so that the earth's magnetic field, which is disturbed by the tension member, can be captured as the measurement signal.

11. Measuring arrangement according to Claim 10, **characterized in that** it also includes at least one data capture and evaluation device (13).

12. Measuring arrangement according to one of Claims 10 or 11, **characterized in that** it is provided stationary on a web belt conveyor (1).

13. Measuring arrangement according to Claim 12, **characterized in that** it has, over the width of the web belt (2), a number of n-sensors, with an interval between them preferably corresponding approximately to the interval of the tension members of the web belt (2).

14. Measuring arrangement according to one of Claims 10 to 13, **characterized in that** the sensors are arranged below the web belt (2) in the carrying run (5) of the web belt conveyor (1).

15. Measuring arrangement according to one of Claims 12 to 14, **characterized in that** the sensors are arranged at the same distance from the web belt (2).

16. Measuring arrangement according to one of Claims 14 or 15, **characterized in that** the sensors are arranged following the contour (troughs) of the web belt (2).

17. Measuring arrangement according to one of Claims 10 to 16, **characterized in that** a number of n-sensors are arranged on a frame or mounting which can be moved over the width of the web belt (2).

18. Measuring arrangement according to one of Claims 10 or 11, **characterized in that** it is arranged on a handcart.

19. Measuring arrangement according to Claim 10, **characterized in that** it is in the form of a portable measurement and capture device (hand scanner).

## Revendications

1. Procédé de surveillance et/ou de contrôle non destructif d'un élément de transmission avec au moins un tirant magnétisable, dans lequel on effectue une mesure uniaxiale ou multiaxiale du champ magnétique terrestre perturbé par le tirant, en ce que l'on guide au moins un détecteur de champ magnétique ou un dispositif comportant plusieurs détecteurs de champ magnétique par rapport à l'élément de transmission ou l'élément de transmission par rapport au dispositif de mesure et on exploite les signaux de mesure détectés avec un dispositif de saisie de données en ce qui concerne les anomalies du champ magnétique détecté, dans lequel on effectue la mesure sans magnétisation (magnétisation extérieure) du tirant.

2. Procédé selon la revendication 1, **caractérisé en ce que** l'on effectue la mesure dans une plage de mesure s'étendant jusque 200 µT, de préférence jusque 100 µT.

3. Procédé selon l'une quelconque des revendications 1 ou 2, **caractérisé en ce que** l'on effectue la mesure sur une courroie d'un transporteur à courroie en matière de caoutchouc élastique avec des tirants formés par des câbles d'acier noyés dans celle-ci.

4. Procédé selon la revendication 3, **caractérisé en ce que** l'on contrôle la position de consigne des tirants dans la courroie au moyen de la mesure de champ magnétique.

5. Procédé selon l'une quelconque des revendications 1 à 4, **caractérisé en ce que** l'on opère le calibrage du dispositif de mesure par la détection d'un signal de mesure de référence de l'élément de transmission concerné ou d'un autre élément de transmission dans un état défini.

6. Procédé selon la revendication 4, **caractérisé en ce que** l'on effectue la mesure pendant le fonctionnement du transporteur à courroie.

7. Procédé selon l'une quelconque des revendications 4 ou 6, **caractérisé en ce que** l'on utilise la mesure pour déterminer la vitesse de la courroie.

8. Procédé selon la revendication 1, **caractérisé en ce que** l'on effectue la détermination de la vitesse par une comparaison continue d'un ou de plusieurs signaux de référence détectés lors d'un premier tour de la courroie avec un ou plusieurs signaux de mesure.

9. Procédé selon l'une quelconque des revendications 4 à 8, **caractérisé en ce que** l'on balaie la largeur de la courroie pendant plusieurs tours de la courroie.

10. Dispositif de mesure permettant de mettre en oeuvre le procédé selon l'une quelconque des revendications 1 à 9, dans lequel le dispositif de mesure comprend un ou plusieurs détecteurs de champ magnétique (10), de préférence multiaxiaux, avec une sensibilité de mesure de ≤ 200 µT, qui sont disposés à distance de l'élément de transmission, de telle manière que le champ magnétique terrestre perturbé par le tirant soit détectable comme signal de mesure.

11. Dispositif de mesure selon la revendication 10, **caractérisé en ce que** celui-ci comprend au moins un dispositif de saisie et d'exploitation de données (13).

12. Dispositif de mesure selon l'une quelconque des revendications 10 ou 11, **caractérisé en ce que** celui-ci est stationnaire sur un transporteur à courroie (1).

13. Dispositif de mesure selon la revendication 12, **caractérisé en ce que** celui-ci présente, sur la largeur de la courroie (2), un nombre de détecteurs n séparés l'un de l'autre par une distance qui correspond de préférence à peu près à la distance séparant l'un de l'autre les tirants de la courroie (2).

14. Dispositif de mesure selon l'une quelconque des revendications 10 à 13, **caractérisé en ce que** les détecteurs sont disposés en dessous de la courroie (2) dans le brin supérieur (5) du transporteur à courroie (1).

15. Dispositif de mesure selon l'une quelconque des revendications 12 à 14, **caractérisé en ce que** les détecteurs sont disposés à égale distance de la courroie (2).

16. Dispositif de mesure selon l'une quelconque des revendications 14 ou 15, **caractérisé en ce que** les détecteurs sont disposés suivant le contour (courbure transversale) de la courroie (2).

17. Dispositif de mesure selon l'une quelconque des revendications 10 à 16, **caractérisé en ce qu'**un nombre de détecteurs n sont disposés sur un châssis ou un chariot déplaçable sur la largeur de la courroie (2).

18. Dispositif de mesure selon l'une quelconque des revendications 10 ou 11, **caractérisé en ce que** celui-ci est disposé sur une charrette à bras.

19. Dispositif de mesure selon la revendication 10, **caractérisé en ce que** celui-ci est réalisé sous la forme d'un dispositif de mesure et de détection portable (scanneur manuel).
